# EUROPEAN PATENT APPLICATION

(11) **EP 1 480 099 A2**
(43) Date of publication of application: **24.11.2004**
(21) Application number: 04006525.2
(22) Date of filing: 18.09.2000
(51) Int. Cl.: G06F 1/00, H04Q 7/32

(54) **Mobile communication unit with a security arrangement**

(30) Priority: 17.09.1999 US 154395 P
(62) Divisional of application: 00966636.3
(71) Applicant: Fingloq AB, 414 51 Göteborg (SE)
(72) Inventor: Martinsson, Roy, SE-426 79 Västra Frölunda (SE); Andler, Oskar, SE-413 21 Göteborg (SE)
(74) Representative: Holm, Maria Linnéa

(57) **Abstract**

The present invention relates to a mobile communication unit (44) provided with a security arrangement (40) for ensuring access to a unit or information in a unit. The security arrangement (40) is an external unit connectable to a communication port of said mobile communication unit (44), said arrangement comprises a connection portion for connection to a communication port of the unit a biometric sensor (45) being connected to said communication unit (44), whereby the communication unit (44) constitute one of a key unit and/or a lock unit, and that identification of a user is executed in the key unit (11) before locking/unlocking is accepted by the lock unit (12).

## Description

### TECHNICAL AREA

The present invention relates to a security system for securing a unit or a set of information.

### DESCRIPTION OF STATE OF THE ART

The increasingly rapid development within the electronics area has resulted in more electrical apparatuses with reduced size and increased mobility. The mobility itself has Iresulted in, not only the apparatus itself but also the information stored therein have become appealing and attractive for thieves.

The known security arrangements provide either locking using hardware or software in combination with a primary input signal.

In the case of hardware lock, a first input unit is used, e.g. fingerprint input (a biometric sensor), pin-code combined with or without an additional unit, e.g. a so-called smart-card or the like.

In the software case, a verification software is used, which controls that a correct input (pin-code, fingerprint etcetera) is presented via an external input unit. Normally, the software is installed in a storage unit, such as a hard disc, which is easily accessible.

### SUMMARY OF THE INVENTION

The object of the present invention is to provide a very reliable and safe device for preventing access to equipment and/or information stored therein.

Another object of the present invention is to provide a device, which can be combined with different units, both for locking and identity input.

One of the advantages with the arrangement, according to the present invention, compared to known technique, is amongst others that (if applicable in a computer) no modifications of the operating system or the BIOS of the computer are needed. The fact is that such systems are easy to force, even without any greater knowledge within the area.

Furthermore, a lock unit, according to the invention, is integrated in the equipment to be protected, implying a complete safety, besides that the normal inputs and outputs of the equipment, ports, etc., do not need to be modified.

These objects have been achieved by means of the security arrangement for securing access to a unit or information in a unit, comprising mainly a key unit and lock unit, which is characterized in that the key unit is arranged in a distance from the lock unit comprising an input unit and a communication unit, and that the identification of a user is carried out in the key unit before locking/unlocking is accepted by the key unit.

The invention relates to a security arrangement for ensuring access to a unit or information in a unit by authenticating a user, the arrangement mainly comprising a key unit and a lock unit. The key unit is arranged in communication with the lock unit and comprising an input unit, a communication unit and means for authentication of the user in the key unit before the arrangement accepts a locking/unlocking of the lock unit. The key unit is arranged to communicate with the lock unit by starting an acceptance sequence upon an authentication by the key unit by sending a request to the lock unit; The lock unit is arranged to respond by transmitting a variable and substantially randomly generated message, and arranged to at the same time calculate and store a numerical value by means of an algorithm using a protected key stored in the lock unit, where the numerical value being derived from the transmitted response message. The key unit is arranged to respond with a numerical value being calculated from the received message by means of an algorithm using a protected key stored in the key unit. The algorithm and protected key are the same as in the lock unit. The lock unit is arranged to accept the authentication if receiving a message containing a value being identical to the value previously calculated by the lock unit. The unit is a computer, cash dispenser, door lock, car door, remote control, mobile communication unit, portable computer and the like. The input unit is a biometric sensor, PIN (Personal Identification Number) code reader, voice detection device, eye detection device, card reader or mobile telephone and so on. The user identity is stored in the key unit. The numerical value is used unchanged in the response, or encrypted in such a way that the lock unit can interpret it.

The lock unit is provided within a memory unit in a computer unit. The key unit comprises a biometric sensor, and the lock unit prevents access to data and it is connected to the computer unit via a controller unit. The controller unit is one of an ISA card, PCI card or the like. The controller unit comprises the key unit. The sensor unit is arranged to initiate the computer unit via the controller unit. A locking operation is initiated automatically, after that a certain time has lapsed and/or by the user via the security arrangement, and/or by the user using a security procedure.
The invention also relates to a mobile communication unit provided with a security arrangement for ensuring access to a unit or information in a unit. The security arrangement is an external unit connected to a communication port of the mobile communication unit. The security arrangement is provided with a biometric sensor being connected to the communication unit, whereby the communication unit constitute one of a key unit and/or a lock unit, and identification of a user is executed in the key unit before locking/unlocking is accepted by the lock unit.

The invention also relates to a method of authentication in a security arrangement for ensuring access to a unit or information in a unit, substantially comprising a key unit and a lock unit, the key unit being arranged in communication with the lock unit and comprising an input unit, a communication unit, and means for authentication of the user in the key unit before the arrangement accepts a locking/unlocking of the lock unit, the method comprising the steps of: initiating an authentication by the key unit upon initiation by a user; initiating an acceptance by the key unit, upon authentication by the key unit, by sending a request to the lock unit; responding by the lock unit with a varying and substantially randomly generated message, and at the same time calculating a numerical value by means of a special algorithm using a protected key stored in the lock unit, and storing it for later use; responding by the key unit with a numerical value being calculated from the message received, using the special algorithm and key used in the lock unit, and accepting authentication if the lock unit receives a message containing a numerical value, which value is identical to the one calculated at the transmission during above step. In the methodthe numerical value is completely derived from the response message.

### BRIEF DESCRIPTION OF THE DRAWINGS

In the following, the invention will be described with reference to the embodiments according to the enclosed drawings, in which:
- Fig.1: shows a block diagram over main parts of an arrangement according to the invention,
- Fig.2: shows a diagram over the communication between two units in the arrangement according to the invention,
- Fig. 3: shows a block diagram over a first embodiment implementing an arrangement according to the invention in a computer unit,
- Fig. 4: is a schematic side-view of a mobile communication unit provided with an arrangement according to the invention, and

### DETAILED DESCRIPTION OF PREFERRED EMBODIMENT

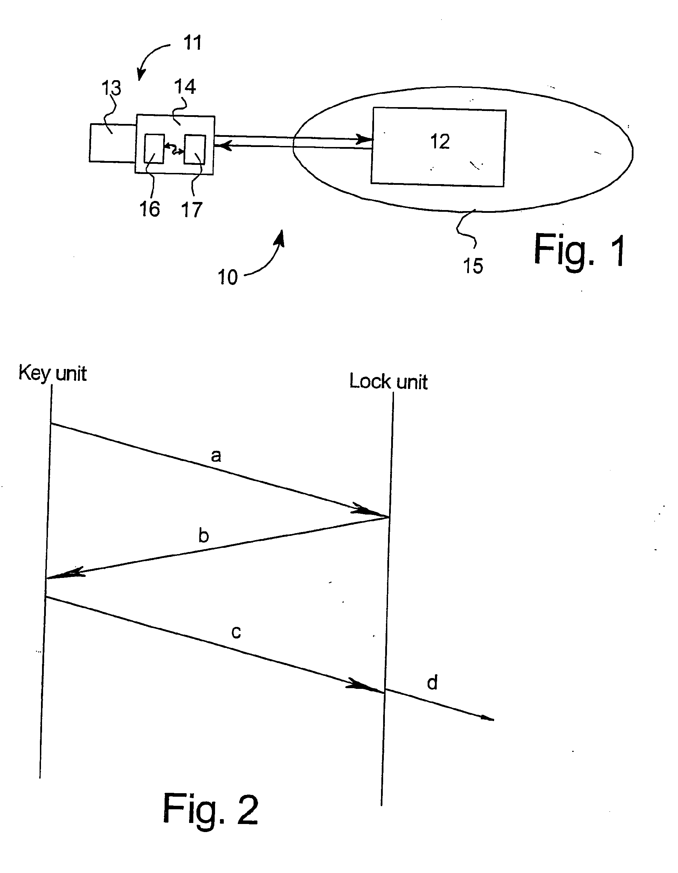

The device 10, according to the invention, which is schematically shown in Fig.1, consists mainly of two units denoted with 11 and 12.

The first unit consists of a sensor or a key part 10 for entering an identity, which performs an identification of the user. The key part 10 may be divided in two units: an input unit 13 and a key unit 14, which are preferably, but not necessarily, integrated in one physical unit 11.

Preferably, the input unit 13 may consist of any type of arrangement, preferably by means of which a unique identification information can be entered. A such arrangement may comprise a biometric sensor, PIN-code reader, voice detection device, eye detection device, card reader and so on, all well known for a skilled person.

The second part consists of a lock unit 12, protecting the object 15 in question.

The key unit 14 initiates a unique communication procedure between the key part 11 and the lock part 12. Unique for the invention is that the identification of the user is directly carried out in the key part 11 and do not occur in the lock part.

After registration of a user, a corresponding lock can be opened. There are two possibilities to open the lock, on one hand during a certain pre-selected time period, on the other hand permanently (if manually chosen), which however gives a poor safety. If the lock has been opened under a certain time period, the user is requested to identify him once more when the time has lapsed.

Under the operation the identity is entered, e.g. by pressing the finger on a sensor (FPS), entering a pine code etcetera. If the identification of the user is approved, an encrypted electronic message from the key unit to the lock unit is sent, whereby the locked resource or object 15 (e.g. a hard disc in a computer) is made available for the user.

Using a secure transferring method between the units guarantees that it is not possible to send a false message to the lock unit for procuring access to the locked unit.

The external unit, the key unit 14, is provided with electronics, mainly including a microprocessor 16 with a built-in and substantially protected program and data memory. The latter is a precaution, enabling access to the program or stored key information for reading or copying.

Preferably, there is a list of allowed users stored in the key unit 14. Maintenance of this register, such as adding new approved users, deletion of users etc., is carried out locally without communication with other units.

The key unit decides at every occasion, if the object should be protected, should be opened or locked. The decision is normally based on an operator/user decision, i.e. the key is initiated with allowed users. The locking may also occur on initiative of the lock unit after a certain predetermined time, if the operator despite a request, do not identify itself within a certain time.

The key unit can be completely open and must not be protected against infringement, since the computer and data store cannot be externally read outside the processor (security function in the processor).

The lock unit 12, which communicates with the key unit, e.g. via a serial connection, is mounted and protected on or in the object 15 to be locked. At each attempt to access the locked object by bypassing the normal login procedure through the key part 11 will be discovered by the lock unit. Alternative steps may be initiated, i.e. inactivity for a longer time period, warning messages, erasing data on a hard disc/storage unit etcetera.

The communication between the key and the lock units is carried out by means of, e.g. digitally coded signals via a serial connection.

The connection may be asynchronous and may occur with a relatively high transfer rate. The communication occurs with a special lock protocol, which may also comprise known parity and time controls.

As mentioned, the purpose with the safety system, according to the invention, is amongst others to prevent unauthorized access to, for instance computers, or more specifically, access to a certain hard disc and the information therein. To obtain an almost complete security, an encrypted protocol can be used in the communication between the key part 11 and the lock part 12. The probability for successful infringement depends on the length of the random number, the protected length of the key and the length of the response. It may easily be made less than, for instance 10⁻¹⁸, which practically means that it is safe for unauthorized access.

The lock protocol is a communication procedure ensuring computer integrity of the transmission and, guarantees that unauthorized infringement of the data exchange between the units cannot occur. If the message exchange is carried out correctly, the locked object is opened and stays open, respectively. If any errors should be detected, the object is locked.

For verifying authentication, the following message exchange may be used (see fig.2):
a. The key unit or the key code 14 starts a verification sequence by sending a request to the lock unit,
b. The lock unit responds with a variable random generated message,
c. At the same time a numerical value is calculated using a special algorithm utilizing a protected key. This value, which is completely derived from the response message sent out, is stored for later use,
d. The key unit responses with a numerical value being calculated from the received message using the same algorithm and key being used in the lock unit. This number may be used unchanged in the response, or coded in such a way that the lock unit can interpret it. If the lock unit receives a message, which contains a number being identical to, the number calculated at the transmission during step b, the authentication is considered as confirmed.

If the message exchange turns out correctly, according to steps a-d above, the locked object is unlocked, or remains open, respectively. If the response does not agree, the object remains locked.

The hidden key code may differ between the key and the lock unit (s) and between the lock units. This is possible because the key unit is initiated with additional information being specific for the connected lock unit, respectively. This enables the lock unit to return a correct response to the lock unit (as if it has access to the key code of the lock unit).

In the most preferred embodiment, a biometric sensor unit is used as the input unit.

Biometric sensors involve considerable advantages for identification of persons at entrance, computer access etc. Amongst the advantages, the speed can be mentioned, an extremely high degree of security for the identification and also above all no problems with forgotten passwords or password, which have fallen into the wrong hands. In combination with the invention, the sensor part performs a biometric identification of the fingerprints of the user. When the identification of the fingerprints of the user is approved, an encrypted message is sent from the key unit to the lock unit, whereby the locked resource is made available to the user.

Registers of allowed fingerprints are in the key unit. Maintenance of this register, i.e. adding new approved fingerprints, removing fingerprints etc., is done locally without any communication with other units.

The sensor unit may be provided with indication means, such as two light-emitting diodes, a red one and a green one, for facilitating registration and deregistration of fingerprints. The diodes indicate whether the lock is closed or opened, and also the status at the registration/removal of fingerprints.

In the following a number of non-limiting examples are given, which clarify different aspects of the invention.

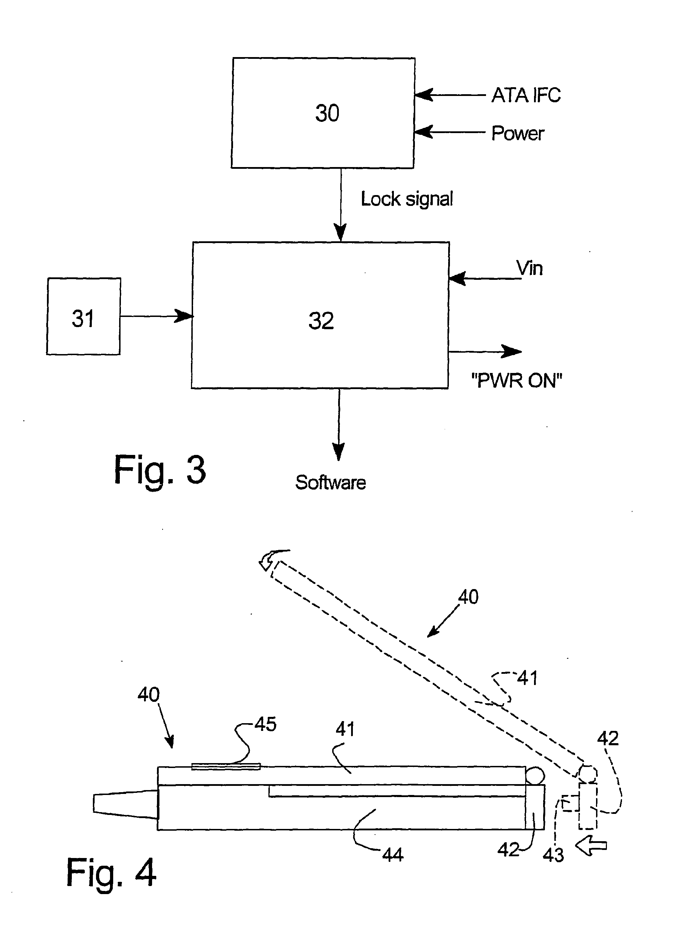

The first non-limiting example, shown in fig. 3, relates to a hard disc unit 30 (or another memory unit or storage unit) in a computer unit provided with a fingerprint sensor 31 or a biometric sensor, i.e. an add-on unit. An add-on is one of many applications of the lock system according to the invention. With an add-on unit is meant a standard unit, such as a hard disc, which has been provided with a lock unit and which is connected to a computer unit (or the like) via a special electrical arrangement, which are located on, for instance a controller board 32 (insert card to the computer, such as ISA, PCI or the like). The electronic comprises of the key unit and also applications for communication with the soft ware in the computer via said data bus. To the board 32, a sensor 31 or alternatively other identification equipment is connected directly or via, e.g. IR or radio (Bluetooth) or the like.

In this preferred embodiment, a standard hard disc is modified to work together with the lock device according to the invention. This implies that it is provided with an internally mounted lock system and which is through hardware prevents the disc from accessing data. An appropriate procedure depends on the unit (disc) construction.

Connections to the unit remain the same as to an ordinary hard disc, i.e. signal cables and a power feed from the power unit of the computer. An additional connection for the communication of the lock with the controller is provided.

Lock-functions, according to the invention, are obtained by means of the key unit and lock unit, respectively. The fingerprint sensor is connected through a cable and switch to the interface of the controller unit, on which the key unit is applied. The lock unit is arranged on the hard disc.

Except for lock functions, electronics for the communication with the programs of the computer are arranged in the lock unit. The program may amongst others pre-warn about the locking of the hard disc. Moreover, the locking can be carried out from the software.

To restart the computer a switch is used, normally mounted on the front side. This is always energised (Vin=+5 V), even when the computer is shut off, provided that the mains voltage is switched on. When switched, a signal is provided to the motherboard and the computer is started. By using the fingerprint sensor, the switch can be disconnected and Vin, which is through the contact, is instead connected to the controller card. From there it is connected further to the fingerprint sensor. In this way the fingerprint sensor is always switched on. An approved log in gives a signal from the controller card to the motherboard replacing the ordinary button pressing.

Locking may be initiated in several ways:
- Automatically, when a certain amount of time has passed (e.g. in case of unauthorized manipulation)
- When the user locks via the locking system.
- When the user locks with using a monitoring procedure, described below.

Unlocking can normally be carried out in one way, namely by providing a correct fingerprint.

If the person/persons who has/have registered their fingerprint/s is/are not available when the disc must be unlocked, there is a possibility for, e.g. the system manager or the security responsible unlock the unit by using an especial code. This must be a sufficiently complicated code to prevent practically any access.

An attempt made to force lock by providing false signals to the hard disc, may result in locking it for further access attempts, for instance during a certain time period or until a responsible person has reset the lock function.

The fingerprint sensor may also be completed with other locking devices, for instance smart cards.

With the exception for previously enumerated functions, the add-on unit is completely compatible with a standard hard disc.

For installation of an add-on unit, special software can be required. This will supervise the lock function via a controller card and indicate the status for the user. Particularly, the user must be warned in advance in good time before the disc is locked. With this program, it is also possible to directly lock the unit. Suitably, the program is always active and the status of the disc is shown in the system tray (activity field), where also different commands can be given.

Other application areas for the system, according to the invention, are for "Notebooks/Laptops", i.e. portable computers, where all types of storing media are secured, HDD, FDD, CD, RAM, ROM, flash memory, main controller board comprising all the components such as BIOS, controller units for controlling data media etcetera.

In stationary computers/servers, the protection of the components on network cards and the like for administration of networks can be applied.

The system may be arranged as a remote control combined with a mobile telephone, as a code-provider unit. Data code generator for non-recurrent codes for accesses to computers, alarm systems, car locks, and passage systems etcetera.

Transaction codes via telephone systems, GSM, WAP or the like may occur. The unit, according to the invention, unlocks the unit and after that it is possible to choose the type of action.

In an application using the invention for bank transactions or the like via, e.g. a computer, the client may be provided with a sensor/key unit according to the invention. The client unit is provided with an embedded unique pin-code and a special algorithm. The pin-code may be of the type being used at credit or bankcard applications, but slightly more advanced. The same pin-code can also be stored in the key unit being used by the client. The pin-code may be changed by means of special terminals on the bank. The same unique code can be associated with the account number of the client.

In the bank, when a transaction request is received a response is generated by means of a special calculation unit, which proves that the request from the correct key unit is authentic belonging to the right account holder.

The function may be described in more detail, according to the following steps:
- the client contacts the bank by means of a computer program installed in his computer and enters his account number,
- the bank issues a reply comprising an identification part, lock-data and so on,
- the client selects the type of transaction and fills in the amount and so on and verifies the transaction,
- the program transmits a locking transaction, according to the above description, and also transaction data comprising, for instance amount, account number, time stamp and so on,
- a reply is received only if the lock unit has received the right identification from the key unit; the response may comprise identity, variable locking/unlocking data and also transaction data, and is sent to the bank. The transaction data (for instance the sum) and authentication of the performer of the transaction is verified at the same time.
- the bank uses the algorithm, as mentioned before, together with the pin-code of the client for verifying the response, and if correct response can be urged of the incoming responses and transaction data, which assures that nothing has been changed after the biometry control, the transaction is accepted and the client is informed.

If the trade or transaction is carried out, for instance over Internet, the user may be provided with a key unit arranged with, for instance a biometric sensor or the like. The key unit of the user is provided with a unique identification in form of a check sum or the like. The same unique identification can be associated with the accounting number of the user at the bank. The bank is arranged with controlling means for verification of correct transaction request in the same way as above. In this case, the verification and the transaction are first performed by the bank and then to the seller, in the same way as above.

In one further example, the invention is used in a mobile unit, such as a mobile telephone, shown in Fig. 4. The security arrangement 40 consists of two relative each other pivoting parts 41 and 42 (according to this example), where the part 42 comprises a connector 43 for connection to the communication port (not shown) of the telephone 44. The device comprises a sensor unit 45, such as a biometric sensor and the like and corresponding electronics and memory arranged on the second part 41. The electronics can be powered by the power source of the telephone. The connection part is connected to the telephone and the sensor part 41 is attached onto the backside of the telephone, for instance over its battery. When connected, the telephone can be used as a control or key unit, according to the above description.

The telephone can only be accessed if the right person verified via the sensor uses the telephone, which also can be used for controlling other units, for instance when payments over the telephone network, remote controlling, opening doors, access to computers (for instance via the IR interface), etc. In this case the lock unit can be implemented in the telephone.

Examples of other applications employing the invention include:
- Radio add-on (RFR), i.e., a memory unit, for instance a hard disc, provided with a biometric or transponder card reader.
- Lock unit for portable equipment (hand-held computers), only operating when a certain transponder is in the vicinity. The transponder can for instance be built in the wristwatch. In addition, the wristwatch may be provided with a biometric sensor communicating with the hand-held computer via IR or RF.
- The lock device may be built inside a remote control for ensuring that only one authorized user can obtain access to the remote-controlled equipment.
- When encrypting/decrypting, i.e. e-mails or files, encryption can be carried out by means of a public key while decryption by means of a private key being verified with regard to the right person using a biometric sensor.

The invention is not limited to use of a key or lock unit, but combinations of several key and lock units where one or several key/lock units cooperate may also occur. The block diagram in figure 5 shows such arrangement, in which L₁-L₅ denote lock units and K₁ and K₂ denote key units. A key unit, for instance K₁ may be arranged to open a number of lock units, for instance L₁-L₄, while K₂ opens L₄ and L₅. The term open means also access to different resources and information. The communication between lock units and between lock units and key units can be carried out via radio, Internet (or other networks), IR and so on, preferably decrypted according to the description above.

While we have illustrated and described only preferred embodiments of the invention, it is realized that several variations and modifications within the scope of the enclosed claims can occur.

## Claims

1. A mobile communication unit (44) provided with a security arrangement (40) for ensuring access to a unit or information in a unit,
***characterised in***
**that** said security arrangement (40) is an external unit connectable to a communication port of said mobile communication unit (44), said arrangement comprises a connection portion for connection to a communication port of the unit a biometric sensor (45) being connected to said communication unit (44), whereby the communication unit (44) constitute one of a key unit and/or a lock unit, and that identification of a user is executed in the key unit (11) before locking/unlocking is accepted by the lock unit (12).

2. The mobile communication unit (44) of claim 1, wherein
- said key unit (11) is arranged to communicate with the lock unit (12)
- by starting an acceptance sequence upon an authentication by said key unit (11) by sending a request to said lock unit (12),
- said lock unit (12) is arranged to respond by transmitting a variable and substantially randomly generated message, and arranged to at the same time calculate and store a numerical value by means of an algorithm using a protected key stored in said lock unit (12), where said numerical value being derived from the transmitted response message,
- said key unit (11) is arranged to respond with a numerical value being calculated from the received message by means of an algorithm using a protected key stored in said key unit (11), said algorithm and protected key being the same as in the lock unit (12),
- said lock unit (12) is arranged to accept the authentication if receiving a message containing a value being identical to the value previously calculated by the lock unit (12).

3. The mobile communication unit (44) as claimed in claim 1,
***characterised in***
**that** the said unit is mobile communication unit, portable computer and the like.

4. The mobile communication unit (44) as claimed in claim 1 - 3,
***characterised in***
**that** the user identity is stored in the key unit (11).

5. The mobile communication unit (44) as claimed in claim 1,
***characterised in***
**that** said numerical value is used unchanged in the response, or encrypted in such a way that the lock unit (12) can interpret it.

6. A method of authentication in a security arrangement (10) in a mobile communication unit (44) according to claim 1 for ensuring access to a unit or information in a unit, substantially comprising a key unit (11) and a lock unit (12), said key unit (11) being arranged in communication with said lock unit (12) and comprising an input unit (13), a communication unit (14), and means for authentication of the user in the key unit (11) before the arrangement (10) accepts a locking/unlocking of said lock unit (12), the method comprising the steps of:
a. initiating an authentication by said key unit (11) upon initiation by a user,
b. initiating an acceptance by the key unit (11), upon authentication by said key unit (11), by sending a request to the lock unit (12),
c. responding by the lock unit (12) with a varying and substantially randomly generated message, and
d. at the same time calculating a numerical value by means of a special algorithm using a protected key stored in said lock unit (12), and storing it for later use,
e. responding by the key unit (11) with a numerical value being calculated from the message received, using said special algorithm and key used in the lock unit (12), and
f. accepting authentication if the lock unit (12) receives a message containing a numerical value, which value is identical to the one calculated at the transmission during step d.

7. Method as claimed in claim 6,
***characterised in***
**that** said numerical value is completely derived from the response message.
